# EUROPEAN PATENT SPECIFICATION

(11) **EP 1 638 038 B1**
(45) Date of publication and mention of the grant of the patent: **01.04.2009**
(21) Application number: 05291955.2
(22) Date of filing: 21.09.2005
(51) Int. Cl.: G06K 9/34, G06K 9/52

(54) **Method of determining an image descriptor, image comparison method, image search method and associated devices**
Verfahren zur Bestimmung eines Bilddeskriptors, Verfahren zum Bildervergleich, Verfahren zur Bildsuche, und entsprechende Vorrichtungen
Procédé de détermination d'un descripteur d'mage, procédé de comparaison d'images, procédé de recherche d'images et dispositifs associés

(30) Priority: 21.09.2004 FR 0409977
(43) Date of publication of application: 22.03.2006
(73) Proprietor: Canon Research Centre France, 35510 Cesson-Sevigne (FR)
(72) Inventor: Le Floch, Hervé, 35000 Rennes (FR)
(74) Representative: Santarelli

(56) References cited:
- US-A- 5 572 602
- US-A1- 2003 099 396
- US-B1- 6 463 426
- JAIN A K ET AL: "IMAGE RETRIEVAL USING COLOR AND SHAPE" PATTERN RECOGNITION, ELSEVIER, KIDLINGTON, GB, vol. 29, no. 8, 1 August 1996 (1996-08-01), pages 1233-1244, XP000592429 ISSN: 0031-3203

## Description

The invention concerns a method of determining an image descriptor, a method of comparing two digital images and a method of searching for an image in a database. The invention also concerns associated devices.

The comparison of two digital images, for example in the context of a search for similarity between a source image and the images in a database, often uses descriptors of the images to be compared.

The purpose of such descriptors is to best represent the characteristics of the content of the digital image in the form of a set of information that is as small as possible.

The comparison of two digital images, with a view for example to determining the proximity of the contents of these images, then amounts to a comparison of the descriptors of each image, which can be achieved simply and rapidly because of the small size of the descriptors previously mentioned. In practice, the comparison of the image descriptors can be achieved by calculating a distance between the two descriptors, a small calculated distance reflecting the proximity of the contents of the images in question.

Naturally it is sought to use descriptors which are as robust as possible to geometric distortions of the image. This is because it is wished for the descriptor comparison method that has just been described to recognize the similarity of two images where the only difference would stem from an elementary geometric manipulation without substantial modification to the content.

The global descriptors, which homogeneously use data relating to the various parts of the digital images, can in general be calculated in a relatively simple and rapid fashion; they are also particularly robust to certain transformations, such as for example changes of scale.

The known descriptors of this type are however not very robust to the addition of a frame. A comparison of two digital images made with a descriptor of this type would therefore result in an absence of similarity between two digital images distinguished only by the presence and absence of a frame.

It was consequently necessary, when it was wished to make an image comparison robust to the addition of a frame, to use particular descriptors such as the local descriptors described in the article "Indexing based on scale invariant interest point" by K. Mikolajczyk and C. Schmid, INRIA, International Conference on Computer Vision, 2001. The use of such descriptors is however more complex and expensive in calculation time and may be less appropriate with regard to robustness vis-à-vis other types of transformation, for example a pronounced change in scale or pronounced compression.

Thus the invention aims in particular to propose a descriptor determination method for a digital image which makes it possible to keep the advantages of certain known descriptors, and in particular the speed of calculation and the robust change of scale of the global descriptors, with in addition good robustness to the addition of a frame.

The invention relates to a method of determining a global image descriptor from a digital image, characterized in that it comprises the following steps:
- identifying at least one peripheral area of the image likely to represent a frame;
- obtaining a transformed image from the digital image according to the result of the identification step;
- applying a global image descriptor calculation algorithm to the transformed image in order to obtain said descriptor.

The peripheral area of the image, which possibly comprises a frame, is thus processed in a simple fashion, which also makes it possible to choose the descriptor calculation algorithm according to criteria other than robustness to the addition of a frame.

The step of obtaining the transformed image comprises for example a step of eliminating the peripheral area. The possible presence of a frame thus does not matter.

The identification step can also comprise a step of detecting the presence in the image of at least one frame part.

In this case, in the case of a positive result at the detection step, the step of obtaining the transformed image comprises a step of eliminating the peripheral area, whilst in the case of a negative result at the detection step the step of obtaining the transformed image may consist of using the digital image as the transformed image.

The transformation of the image is thus best adapted to the type of image processed.

The identification step possibly comprises a step of determining the position in the image of at least one frame part.

The step of determining the position can then comprise the use of a contour detection algorithm.

The peripheral area can for example be determined according to said position.

The invention also proposes a method of comparing a first digital image with a second digital image, characterized in that it comprises the following steps:
- identifying at least one peripheral area of the first image likely to represent a frame;
- obtaining a transformed image from the first image according to the result of the identification step;
- applying a global image descriptor calculation algorithm to the transformed image in order to obtain a first descriptor;
- calculating a distance between the first descriptor and a second descriptor obtained by applying said image descriptor calculation algorithm to the second image.

Such a comparison method deals in a simple manner with the problem of the possible presence of a frame, whilst leaving a choice to the designer with regard to the descriptor calculation algorithm used.

The step of obtaining the transformed image comprises for example a step of eliminating the peripheral area.

According to a first possibility for implementation, the comparison method also comprises the following steps:
- applying the image descriptor calculation algorithm to the first image in order to obtain a third descriptor;
- calculating a distance between the third descriptor and the second descriptor.

Thus use is made firstly of a descriptor of the image after elimination of the peripheral area identified and secondly a descriptor of the raw image, which makes it possible to ensure that one of the two descriptors constitutes a good representation of the content of the image.

According to a second possibility for implementation, the identification step comprises a step of detecting the presence in the first image of at least one frame part.

In this case, in the case of a positive result at the detection step, the step of obtaining the transformed image can comprise a step of eliminating the peripheral area, whilst in the case of a negative result at the detection step the step of obtaining the transformed image can consist of using the digital image as the transformed image.

A descriptor is used here that is normally the best adapted to represent the content of the image.

The invention also proposes a method of searching, from a first digital image, in a database comprising a plurality of second digital images, which comprises a comparison method as mentioned previously.

The invention also proposes a method of searching, from a first digital image, in a database comprising a plurality of second digital images, characterized by a step of calculating the distance between a first descriptor obtained by applying a global image descriptor calculation algorithm to the first image and a second descriptor obtained by applying the image descriptor calculation algorithm to a transformed image obtained from a second image by eliminating a peripheral area identified on said second image as likely to represent a frame.

The problem of the possible presence of a frame in the second image present in the database is thus removed by means of a descriptor repeating the previously mentioned concept.

The search method can also comprise a step of calculating the distance between the first descriptor and a third descriptor obtained by applying the image descriptor calculation algorithm to the second image. It is thus ensured that the second descriptor or third descriptor correctly represents the content of the second image.

The search methods proposed can also comprise the following steps:
- for each of the second images, calculating the distance between the first image and this second image by the use of said descriptors;
- selecting the second image for which the calculated distance is minimum.

In a similar manner, the invention proposes a device for determining a global image descriptor from a digital image, characterized in that it comprises:
- means of identifying at least one peripheral area of the image likely to represent a frame;
- means of obtaining a transformed image from the digital image according to the identification resulting from the identification means;
- means for applying a global image descriptor calculation algorithm to the transformed image, thus generating said descriptor.

The means of obtaining the transformed image comprise for example a means of eliminating the peripheral area.

The identification means may comprise means of detecting the presence in the image of at least one frame part.

The device may then comprise means for:
- in the case of the generation of a positive result by the detection means, eliminating the peripheral area, and
- in the case of the generation of a negative result by the detection means, using the digital image as a transformed image.

According to one possibility for implementation, the identification means comprise means of determining the position in the image of at least one frame part.

The means of determining the position comprise for example contour detection means.

The identification means can be coupled to the position determination means.

The invention also proposes a device for comparing a first digital image with a second digital image, characterized in that it comprises:
- means of identifying at least one peripheral area of the first image likely to represent a frame;
- means of obtaining a transformed image from the first image according to the identification resulting from the identification means;
- means of applying a global image descriptor calculation algorithm to the transformed image in order to obtain a first descriptor;
- means of calculating the distance between the first descriptor and a second descriptor obtained by applying said image descriptor calculation algorithm to the second image.

The device may then comprise:
- means for applying the image descriptor algorithm to the first image generating a third descriptor;
- means of calculating the distance between the third descriptor and the second descriptor.

The invention also proposes a device for searching, from a first digital image, in a database comprising a plurality of second digital images, which comprises a previously mentioned comparison device.

Finally, the invention proposes a device for searching, from a first digital image, in a database comprising a plurality of second digital images, characterized by means of calculating the distance between a first descriptor obtained by applying a global image descriptor calculation algorithm to the first image and a second descriptor obtained by applying the image descriptor calculation algorithm to a transformed image obtained from a second image by the elimination of a peripheral area identified on said second image as likely to represent a frame.

The device may comprise means of calculating the distance between the first descriptor and the third descriptor obtained by applying the image descriptor calculation algorithm to the second image.

The aforementioned search devices comprise for example:
- means of calculating, for each of the second images, the distance between the first image and this second image using said descriptors;
- means of selecting the second image for which the calculated distance is minimum.

The advantages relating to these devices correspond by analogy to those mentioned above in terms of method.

The invention can be implemented using a data storage means comprising computer program code instructions for executing the steps of a previously mentioned method.

A computer program is also proposed, containing instructions such that, when said program is controlling a programmable data processing device, said instructions cause said data processing device to implement a method as mentioned above.

Other characteristics and advantages of the invention will emerge in the light of the following description, given with reference to the accompanying drawings, in which:
- figure 1 depicts an apparatus able to implement the invention;
- figure 2 depicts the general diagram of an image search method;
- figure 3 depicts an image search method according to a first embodiment of the invention;
- figure 4 depicts an image search method according to a second embodiment of the invention;
- figure 5 depicts a method of estimating a peripheral area of a digital image;
- figure 6 depicts a detail of the method of figure 5;
- figure 7 depicts an example of a digital image provided with a frame;
- figure 8 depicts the image of figure 7 after elimination of the frame.

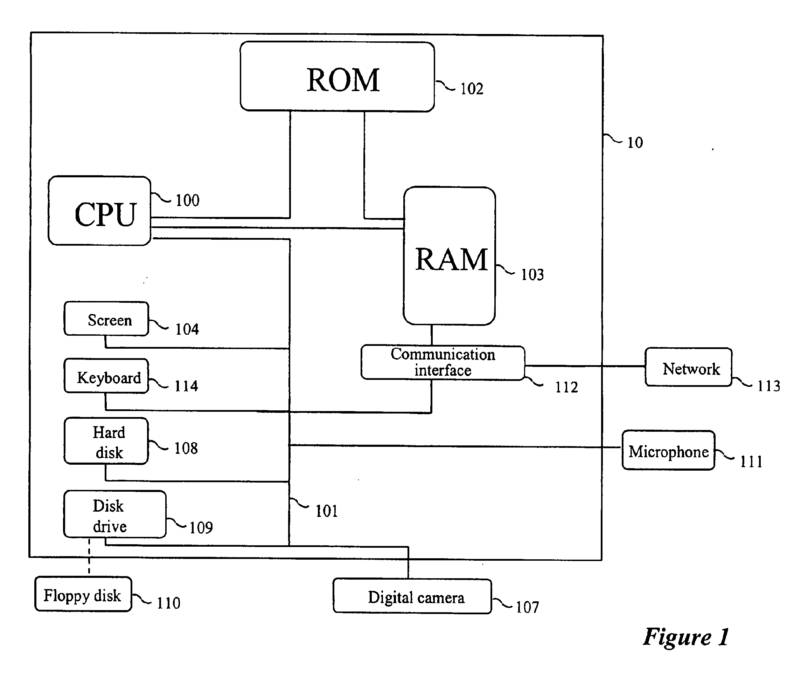

Figure 1 presents the main elements of a programmable apparatus able to implement the methods proposed by the invention.

The apparatus in figure 1 can constitute a device for determining a descriptor, an image comparison device and an image search device according to the teachings of the invention.

The apparatus in figure 1 given by way of an example is a microcomputer 10 connected to various peripherals such as a digital camera 107 (or a scanner, or a digital photographic apparatus, or any image acquisition or storage means) connected to a graphics card and supplying a digital data processing apparatus. The apparatus can in a variant be a workstation.

The apparatus 10 comprises a communication bus 101 to which there are connected:
- a central processing unit or CPU 100 (microprocessor)
- a read only memory 102 (or ROM), able to contain one or more computer programs, according to the invention, and making it possible to use the algorithms mentioned below,
- a random access memory 103 (or RAM) adapted to store variables, parameters and data processed during the execution of the various aforementioned algorithms, as well as possibly, temporarily, the instructions of the aforementioned computer program or programs,
- a screen 104 for displaying data or what they represent (for example an image) and/or serving as a graphical interface with the user, who will be able to interact with the program or programs according to the invention by means of a keyboard 114 or any other means such as a pointing device, such as for example a mouse or optical pen,
- a hard disk 108 able to store the program or programs,
- a disk drive 109 able to receive a diskette 110 and to read or write thereon digital data processed or to be processed according to the invention,
- a communication interface 112 connected to a distributed communication network 113, for example the Internet, the interface being able to transmit and receive digital data, able to constitute in particular digital images, such as those mentioned below.

The communication bus 101 affords communication and interoperability between the various elements included in the microcomputer 10 or connected to it. The representation of the bus is not limiting and in particular the central unit is able to communicate instructions to any element of the microcomputer 10 directly by means of another element of the microcomputer 10.

The executable code (ie the sequence of instructions) of the program or of each program enabling the programmable apparatus 10 to implement the methods according to the invention described below can be stored for example on the hard disk 108 or in read-only memory 102 as depicted in figure 1.

For its execution, the executable code can be transferred from the hard disk 108 to the random access memory 103.

According to a variant, the diskette 110 can contain data as well as the executable code of the aforementioned program or programs which, once read by the apparatus 10, will be stored on the hard disk 108 or temporarily in random access memory 103.

In a second variant, the executable code of the program or programs can be received by means of the communication network 113, via the interface 112, in order to be stored in an identical fashion to that described above.

The diskettes can be replaced by any information medium such as for example a compact disk (CD-ROM) or memory card. In general terms, an information storage means, able to be read by a computer or by a microprocessor, integrated or not in the apparatus, possibly removable, is adapted to store one or more programs whose execution enables the methods according to the invention to be implemented. In more general terms, the program or programs can be loaded into storage means of the apparatus 10, such as the random access memory 103, before being executed.

The central unit 100 will control and direct the execution of the instructions or portions of software code of the program or programs according to the invention, instructions that are stored on the hard disk 108 or in the read-only memory 102 or in the other aforementioned storage elements. On powering up, the program or programs that are stored in a non-volatile memory, for example the hard disk 108 or read-only memory 102, are transferred into the random access memory 103, which will then contain the executable code of the program or programs according to the invention, as well as registers for storing the variables and parameters necessary for implementing the invention.

It should be noted that the apparatus comprising the device according to the invention can also be a programmed apparatus. This apparatus then contains the code of the computer program or programs, for example fixed in an application specific integrated circuit (ASIC).

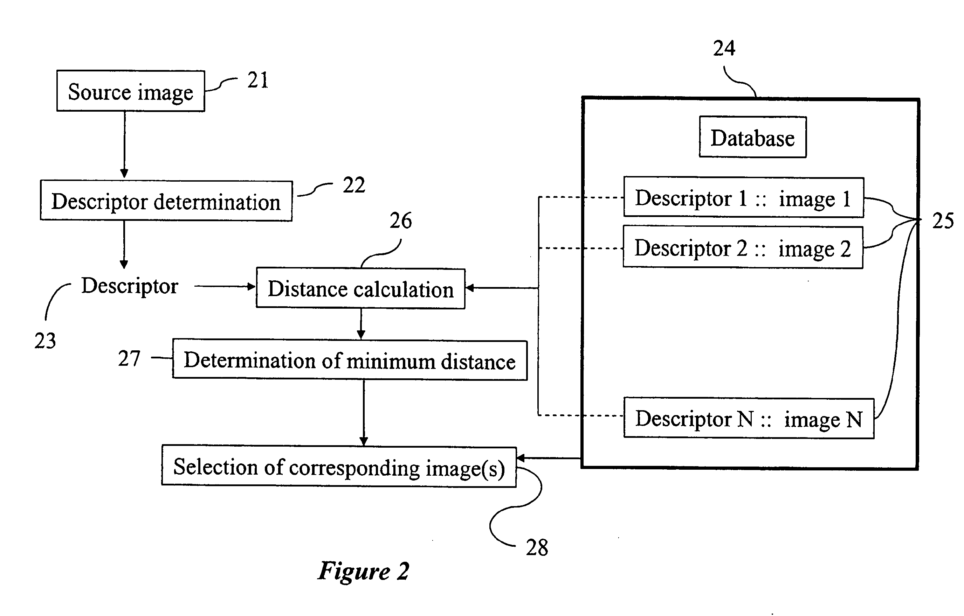

Figure 2 describes the general diagram of an image search method in which the invention can be applied.

In this method, it is sought to find, if such exists, the image in a database 24 representing an object similar to the one represented by a source image 21. This type of method is for example used when it is sought to check whether the source image 21 contains elements of an image or is identical to a protected image contained in a database 24 of protected images.

For this purpose, a descriptor determination method 22, which supplies a descriptor 23 of the source image 21, is applied to the source image 21.

The database 24 for its part contains, for each of its images, an associated descriptor 25. Thus, as depicted in figure 2, if the database comprises N images (referenced image 1, image 2, ..., image N), it also contains N associated descriptors 25 (referenced descriptor 1, descriptor 2, ..., descriptor N).

A step 26 of calculating the distances between the descriptor 23 of the source image 21 and each of the descriptors i associated with an image i is then proceeded with; the distance between two images is inversely proportional to the similarity of these two images as can be perceived by the descriptors used. A comparison is thus made between these two images.

When the distances between the descriptor 23 of the source image 21 and each of the descriptors 25 of the database 24 have been determined at step 26, the minimum distance is determined at step 27 and then at step 28 the image or images in the database 24 for which this minimum distance has been obtained are selected.

In this way by this method the image or images in the database 24 whose content is closest to the source image 21 within the meaning of the descriptor used is obtained.

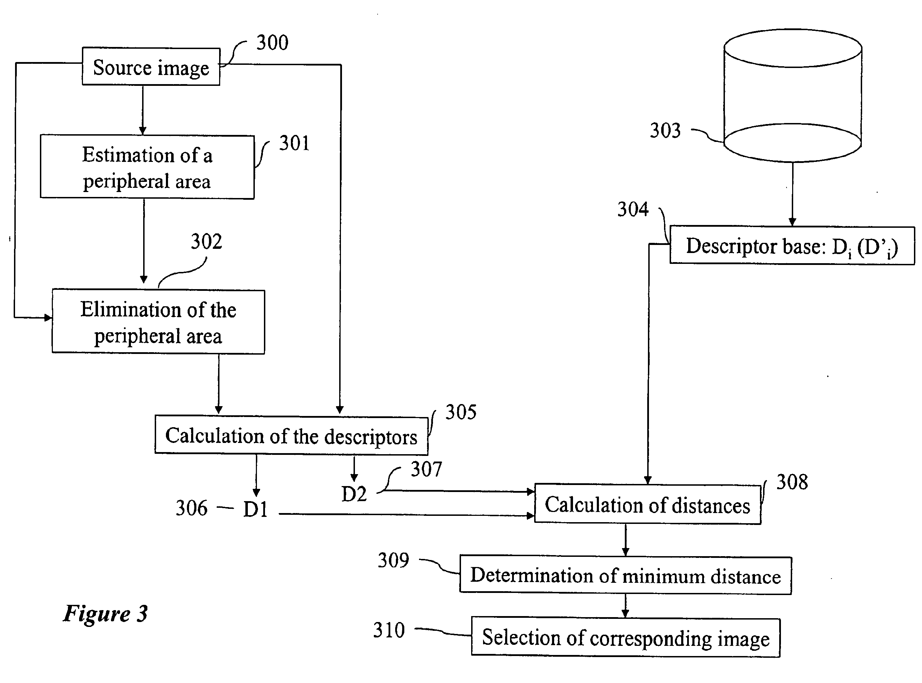

Figure 3 depicts an image search method according to a first embodiment of the invention. The method of figure 3 performs the similarity search in an image database 303 with respect to a source image 300 received for example by the communication interface 112 and stored for example in random access memory 103 or on the hard disk 108.

The method of figure 3 proposes to determine, for the source image 300, a first descriptor D1 and a second descriptor D2 as explained below.

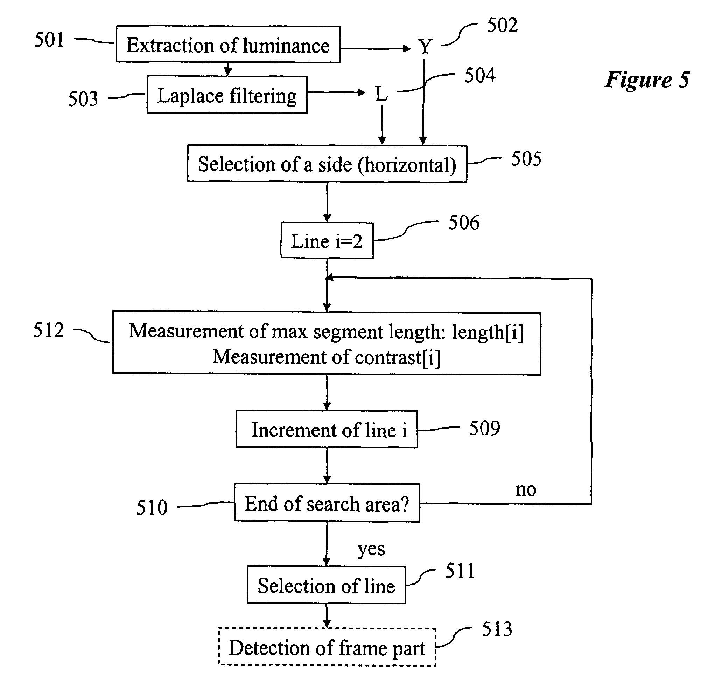

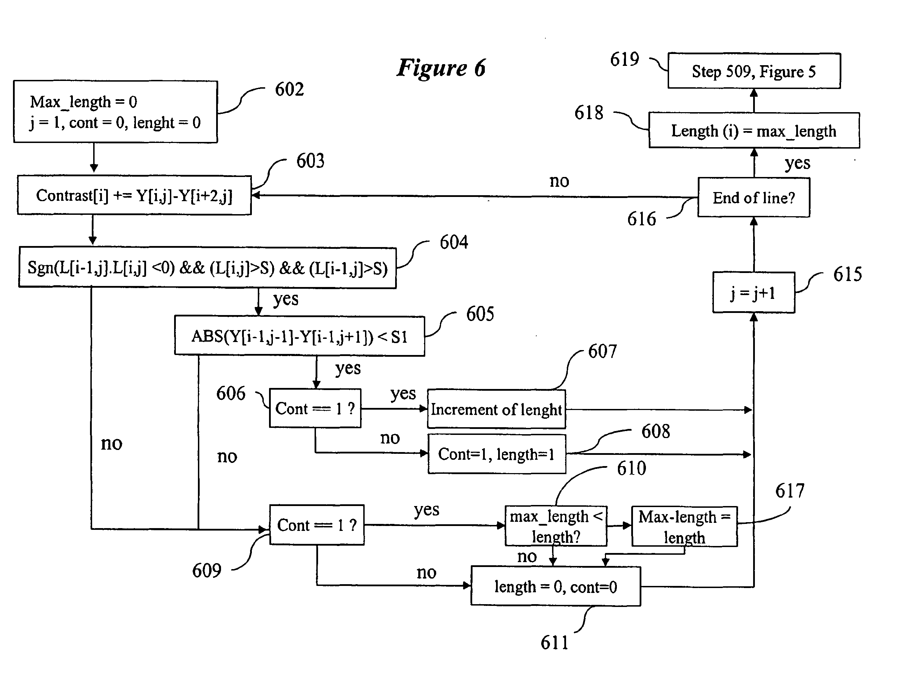

For determining the first descriptor D1 of the source image 300, an algorithm estimating a peripheral area is first of all applied to the source image 300 at step 301. This algorithm, an example of which will be given with reference to figures 5 and 6 below, makes it possible to identify a peripheral area of the image likely not to form part of the image strictly speaking, that is to say for example representing a frame.

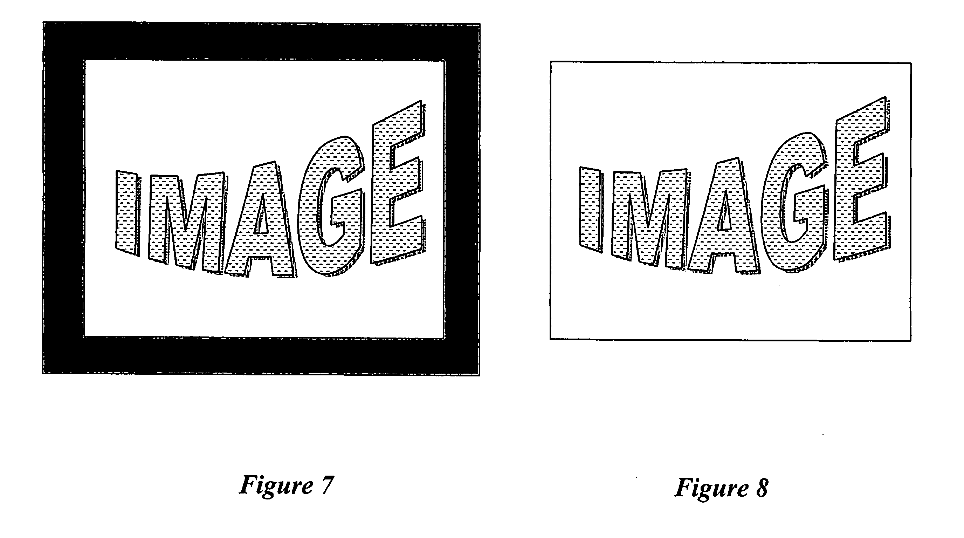

Once the peripheral area has been identified at step 301, a step 302 of transforming the source image 300 by eliminating the peripheral area identified is proceeded with, at the end of which a transformed image is thus obtained. In the aforementioned example, if the source image 300 comprised a frame as depicted for example in figure 7, the transformed image does not have one as shown in figure 8.

An image descriptor calculation algorithm 305 is then applied to the transformed image issuing from step 302 in order to obtain the first descriptor D1 of the source image 300, which is saved, for example on the hard disk 108, during a step 306. The descriptor calculation algorithm used is for example a global descriptor calculation algorithm whose implementation is relatively simple and inexpensive in terms of calculation time. It may be a case for example of an algorithm of the *"Color Layout", "Dominant Color"* or *"Scalable Color"* type. These three descriptors are global descriptors and are specified in the document *"ISO*/*IEC JTC1*/*SC29*/*WG11 N4362 MPEG7 Visual part of eXperimental Model, version 11.0".*

The first descriptor D1 of the source image 300 therefore represents this image after elimination of a peripheral area.

The determination of the second descriptor D2, for its part, is made by applying the descriptor calculation algorithm already mentioned at step 305 to the source image itself. The second descriptor D2 is saved at the step 307.

In this way a first descriptor D1 of the source image was obtained after the elimination of a peripheral area and a second descriptor D2 of the non-modified source image. If the source image 300 has a peripheral area that does not strictly speaking form part of the image, such as for example a frame, the first descriptor D1 will therefore particularly represent the content of the image without this peripheral area. Conversely, if the source image 300 did not comprise a peripheral area of the frame type there is a risk that the first descriptor D1 may represent an image that has undergone an inappropriate elimination, but the second descriptor D2 will correctly represent the source image 300.

At step 308 the calculation of the distances separating, for each descriptor Dᵢ of an image in the database 303, on the one hand the descriptor Dᵢ and the first descriptor D1 determined previously and on the other hand the descriptor Dᵢ and the second descriptor D2 determined previously is proceeded with. Such a descriptor Dᵢ can be obtained in a similar manner to the obtaining of the descriptor D2 for each image in the database. The descriptors Dᵢ of the images in the database 303 are for example grouped together in a descriptor base 304.

Thus, for each image in the database 303, there is calculated not only a distance inversely proportional to the similarity of this image and the source image 300 but also a distance inversely proportional to the similarity between this image and the source image after elimination of the peripheral area.

Once these distances have been calculated, the minimum distance is determined at step 309 and the image in the database which made it possible to obtain this minimum distance is selected at step 310.

It will be noted that the use of the two descriptors D1 and D2 determined as a representation of the image source 300 makes it possible to be free of the problem related to the possible presence of a peripheral area of the frame type in the source image 300 since, whether or not the source image 300 has a peripheral area of the frame type, one of the descriptors D1 and D2 will give a minimum distance when a similar image has been found in the database 303.

When the source image 300 comprises a peripheral area of the frame type, the method proposed by the invention also makes it possible to match an image in the database 303 which is also provided with a frame, since in this case the second descriptor D2 of the source image 300 with the peripheral area would be recognized as being very close to the descriptor Dᵢ of the image in the database 303 provided with the same peripheral area.

In order to provide for the case where the source image has no peripheral area of the frame type whilst the corresponding image in the database 303 is provided with one, it is proposed as a supplementary measure to associate with each image in the database 303 not only a descriptor Dᵢ of the raw image but also a descriptor D'ᵢ obtained by applying the descriptor calculation algorithm used in this base to the image transformed by elimination of the peripheral area, for example in a similar manner to the obtaining of the descriptor D1, or by any other automatic or semi-automatic frame elimination algorithm.

In the case where the image in the database is recorded in two forms (with and without frame), the search algorithm proposed is equivalent to calculating four distances and taking the minimum value thereof. These four distances are respectively the distances between: the source image with frame and the image in the base with frame, the source image with frame and the image in the base without frames, the source image without frames and the image in the base with frame, the source image without frames and the image in the base without frames.

In order to obtain the aforementioned descriptors D'ᵢ, it is naturally possible to use, applied to the images in the database, a descriptor determination method as described above applied to the source image 300. In general, the descriptors used on the source image and on the image in the base are issuing from the same technology.

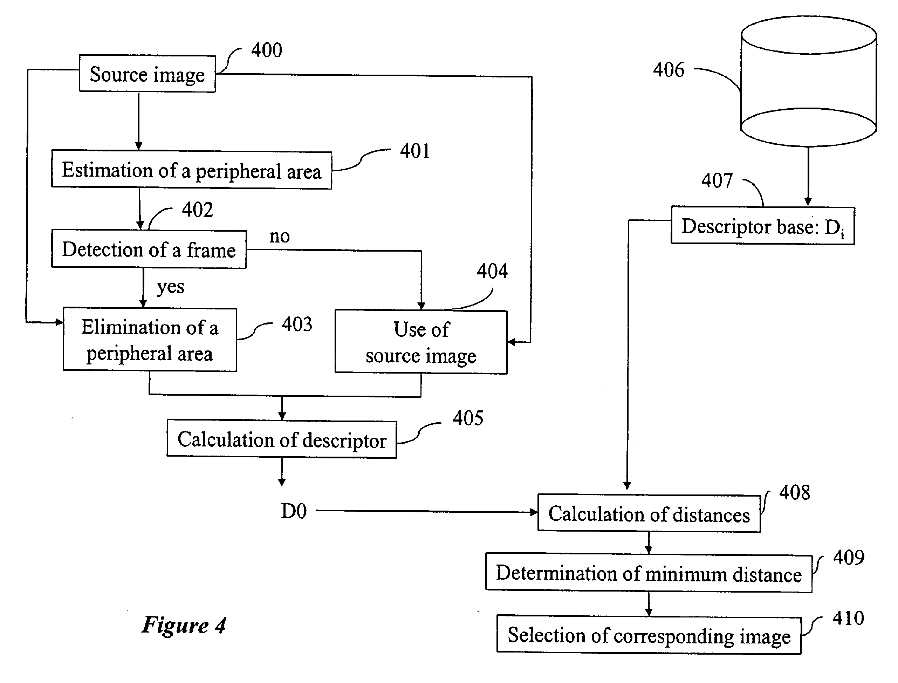

Figure 4 describes a digital image search method according to a second embodiment of the invention.

As before, a source image 400 received for example by the communication interface 112 is considered here. The method described here makes it possible to search in an image database 406 for the digital image or images having a similarity with the source image 400.

To do this, a step 401 of estimating a peripheral area of the source image 400 is first of all performed. Such a step, which makes it possible to determine a peripheral area of the image having particular characteristics and able to represent for example a frame, can be performed in accordance with the proposed method described below with reference to figures 5 and 6.

When a peripheral area has been determined at step 401, step 402 of detecting the presence or at least part of a frame is proceeded with, which consists of checking whether the peripheral area determined at step 401 constitutes or not a frame part for the source image 400, that is to say possibly to identify the peripheral area as part of the frame.

The method mentioned above and described with reference to figures 5 and 6 illustrates one possible way of performing this step 402 of detecting a frame part.

If the presence of a frame is detected at step 402, step 403 is then proceeded with, which consists of eliminating the peripheral area identified at step 401 and detected as a frame part at step E402: this is done by transforming the source image 400 by the elimination of the peripheral area determined at step 401.

In the case where the frame part is detected in the source image 400 at step 402, in this way a transformed image is obtained which corresponds to the source image 400 after elimination of the peripheral area.

If on the other hand the step 402 of detecting a frame part gives a negative result, that is to say the criteria used for the detection concludes that a frame (or frame part) is absent in the source image 400, step 404 is proceeded with, which consists of using the non-modified source image 400 as the transformed image.

It should be noted here that the detection of a frame part on one of the four sides of the image (or the detection of several frame parts) suffices to trigger a positive response at the frame detection step 402. A frame is detected if at least one side of the image has a frame part. Thus, if only one frame part is detected, only the side on which a frame part is detected is modified. The other sides remain unchanged in this case.

It can be remarked that step 404 is not necessarily strictly speaking performed in a practical embodiment since it makes in fact no modification to the source image 400. This step is however shown in figure 4 since it gives a clear understanding of the concepts used by the invention.

The transformed image obtained by means of step 404 is therefore identical to the source image 400. As has just been mentioned, the term "*transformed image*" is however used in order to keep a general presentation of the concepts used in the invention.

Finally, there is applied to the source image 400 a transformation that depends on the identification of a peripheral area made at steps 401 and 402: if a peripheral area is identified as a part of a frame, the transformation applied to the source image is the elimination of this peripheral area, whilst, if no frame part is detected, it can be considered that the transformation applied to the source image 400 is identity.

An image descriptor calculation algorithm such as for example the one already mentioned with reference to figure 3 (step 305) is then applied to the transformed image obtained in either case, which makes it possible to obtain a descriptor D0 of the transformed image.

The descriptor D0 of the source image 400 determined by the method that has just been described has therefore been obtained from the source image itself when no frame part has been detected at step 402 or from the source image after elimination of the peripheral area when the latter has been identified at step 402 as a frame part.

Step 408 is then proceeded with, at which the distances separating the descriptor that has just been obtained D0 from each of the descriptors Dᵢ of the base of the descriptors 407 associated with the image database 406 are calculated.

Then at step 409 it is determined what is the minimum distance amongst the distance calculated at step 408, and then, at step 410, the image for which this minimum distance is obtained is selected as the result of the search.

The similarities search is therefore carried out with the descriptor D0 best suited to representing the source image 400 according to the result of the step of detecting the presence of a frame part 402.

Figure 5 presents a peripheral area determination algorithm that can be used in the methods presented above with reference to figures 3 and 4.

For reasons of conciseness, there is presented here, by way of example, an algorithm for estimating (and possibly detecting) a top horizontal edge of an image. Naturally this algorithm can be used for any side of an image with a few simple transformations.

In the case of figures 3 and 4 (steps 301 and 401) respectively, the peripheral area (or edge) detection algorithm can be applied to the four sides of the image in question.

At a step 501, the luminance Y is extracted from the source image (considered here to be a color image) and then stored in memory at a step 502.

A one-dimensional vertical Laplace filtering is also applied to this luminance at step 503. It is important to note that the orientation of this filter varies depending on whether the side where it is wished to make the estimation is vertical or horizontal. The coefficients of the filter are for example (-1, 1, 4, -1 -1 ). The result of this filtering is a filtered image L, stored in memory at step 504.

The top horizontal side of the image is thus selected as indicated at step 505.

A variable i, which indicates the line processed, is then initialized to 2 at step 506. It can be remarked that this implies that the estimation is performed as from the second pixel; this is because, the visual descriptors being in general robust to small edge additions, the majority of the time it is not useful to estimate (and possibly to detect) peripheral areas or edges of around one pixel.

Step 512 is then passed to, which determines, for the line i in question, the size of the longest peripheral segment, as well as a contrast measurement. One possible embodiment for this step is described in figure 6.

When a line is processed, the following line is passed to at step E509 by incrementing the variable i.

A test is then performed at step 510 in order to know whether the previous line i was the last line to be processed. This is because it is possible to make an estimation of the peripheral area on only part of the image, for example on the top 20% of the lines in the image, since a frame is generally situated in this part.

If the response to the test of step 510 is negative, then the new line is processed by returning to the aforementioned step 512.

If on the other hand the response to the test of step 510 is positive, step 511 now described is passed to.

At step 511, the edge of the frame is determined by choosing the line for which the segment size measured at step 512 is a maximum, that is to say the line whose index i corresponds to the maximum of the values in the table length[ ] calculated as explained in detail below.

The peripheral area is thus determined as the part of the source image situated between this line and the first line (top line) of the source image.

When it is also wished to verify that the area thus identified does indeed correspond to a frame (that is to say finally detecting the presence of a frame), as at step 402 in figure 4, step 513 is proceeded to where it is tested whether the line for which a segment of maximum size was measured at step 512 is sufficiently close spatially to the line for which a maximum contrast was measured at this same step, ie whether the index corresponding to the maximum value of the table contrast[ ] calculated as in the case below and the index corresponding to the maximum value of the table length[ ] are close.

If such is the case (for example if the difference in absolute value between these indices is less than 3), it is then assumed that a frame is present and the result of the step 513 of detecting a frame part is then positive.

On the other hand, if the indices for which the maxima in terms of segment size and contrast are obtained are appreciably different (here a difference greater than 3), it is then considered that the source image has no frame for the edge in question and the result of the step 513 of detecting the presence of a frame part for this edge in this image is therefore negative.

Figure 6 describes more precisely the step 512 of measuring the contrast and maximum length for an edge segment on the line i.

This processing commences with a step 602 where various variables are initialized as indicated now.

A variable j, which represents the index of the current column in question, is initialized to 1.

A variable cont, which indicates whether the current pixel (i, j) is considered to form part of an edge segment of the image, is initialized to zero.

A variable length, intended to indicate the size of the current segment, is also initialized to zero.

Finally, a variable max_length, which represents the maximum length of the edge segment detected for the current line, is initialized to zero.

Step 603 is then proceeded with, where the contrast between the current pixel and the pixel situated precisely two lines higher is added to the variable contrast[i]. In this way, the luminance gradient is calculated over the entire line i. (A strong luminance gradient often characterizes an edge of a frame of an image). This table will of course have been previously initialized to zero.

It is next tested at step 604, using the filtered image L determined at step 503 described above, whether the Laplacians at the point (i-1, j) and at the point (i, j) are of opposite signs (which is a characteristic of a contour in an image), and whether the Laplacians at the point (i, j) and at the point(i-1, j) are higher than a threshold S (a high Laplacian is characteristic of a contour).

If the test performed at step 604 has a positive result, step 605 is passed to, where it is tested whether, on the top line (i-1), the horizontal gradient is small. This is because the frame added to the images is, in the majority of cases, uniform.

If the result of the test of step 605 is positive, it is deduced from that that the pixel (i, j) is a contour pixel. A test will then be performed at step 606 in order to determine whether the variable cont is equal to 1 or 0. If the variable cont is equal to 1, this means that the previous pixel also formed part of a contour, and the variable length representing the length of the segment is incremented by one unit (step 607). If the variable cont is equal to 0, this means that the current pixel constitutes a start of a contour. The variable length is then positioned at 1 as indication of the length of the contour whose detection has just commenced, and the variable cont is positioned at 1 in order to indicate to the following pixel that the detection of a contour element is under way (step 608). In both cases, step 615, which will be described below, is next passed to.

If the result of step 605 is negative, this means that a high contrast exists on a line situated above the current line and, on the assumption of an almost uniform frame used here, it is then considered that the current pixel is not a pixel of the edge of a frame.

Consequently a test is performed at step 609 in order to determine whether the previous pixel was supposed to belong to a contour. This test is carried out in practice by testing the value cont. If the previous pixel belonged to a contour (cont=1), it is checked at step 601 whether the length variable of the current contour is the greatest of the lengths for the current line (by means of the inequality length>max_length), and in the positive case the variable length is saved as the maximum length in the variable max_length at step 617.

In all cases, step 609 (possibly continued by steps 610 and 617) returns to step 611 in order to reset the variable length of the current contour length to zero and to modify the contour indicator variable cont to zero, since the current pixel is no longer an edge pixel.

Step 615 described below is then passed to in order to consider the following pixel.

If the response to the test of step 604 is negative, this also implies that the current pixel is not a pixel of a contour and step 609 described above is therefore passed to for a processing similar to that carried out when the test of step 605 is negative.

When the steps that have just been disclosed are performed for the pixel (i, j), step 615 is passed to, as already mentioned, at which the index of column j is incremented.

Next step 616 is passed to, where it is tested whether the end of line is reached, that is to say whether the column having the incremented index j is external to the image. In the negative, the processing of the line i must continue and thus step 603 already described is returned to in order to process the new pixel (i, j) where j is incremented.

If the end of line is reached, step 618 is passed to, where the maximum length detected for a segment on the line i is saved in the table length [ ] according to the formula length[i]=max_length.

The processing then continues at step 509 in figure 5 described above.

The examples that have just been given indeed constitute only possible embodiments of the invention.

## Claims

1. Method of determining a global image descriptor from a digital image, **characterized in that** it comprises the following steps:
- identifying (301; 401, 402) at least one peripheral area of the image likely to represent a frame;
- obtaining (302; 403, 404) a transformed image from the digital image according to the result of the identification step (301; 401, 402), by either eliminating the peripheral area or using the digital image as the transformed image;
- applying a global image descriptor calculation algorithm (305; 405) to the transformed image in order to obtain said descriptor (D1; D0).

2. Method according to Claim 1, wherein the step of obtaining the transformed image comprises a step (302; 403) of eliminating the peripheral area.

3. Method according to Claim 1, wherein the identification step comprises a step (402) of detecting the presence in the image of at least one frame part.

4. Method according to Claim 3, wherein:
- in the case of a positive result at the detection step (402), the step of obtaining the transformed image comprises a step of eliminating the peripheral area (403);
- in the case of a negative result at the detection step (402), the step of obtaining the transformed image consists of using the digital image as the transformed image (404).

5. Method according to one of Claims 1 to 4, wherein the identification step comprises a step of determining the position in the image of at least one frame part.

6. Method according to Claim 5, wherein the step of determining the position comprises the use of a contour detection algorithm.

7. Method according to Claim 5 or 6, wherein the peripheral area is determined according to said position.

8. Method of comparing a first digital image with a second digital image, **characterized in that** it comprises the following steps:
- determining a first descriptor from the first digital image according to the method of any of claims 1-7;
- calculating the distance (308; 408) between the first descriptor (D1; D0) and a second descriptor (Di) obtained by applying said image descriptor calculation algorithm to the second image.

9. Method according to Claim 8, wherein the step of obtaining the transformed image comprises a step (302; 403) of eliminating the peripheral area.

10. Method according to Claim 9, comprising the following steps:
- applying the image descriptor calculation algorithm (305) to the first image in order to obtain a third descriptor (D2);
- calculating a distance between the third descriptor (D2) and the second descriptor (Di).

11. Method according to Claim 8, wherein the identification step comprises a step (402) of detecting the presence in the first image of at least one frame part.

12. Method according to Claim 11, wherein:
- in the case of a positive result at the detection step (402), the step of obtaining a transformed image comprises a step of eliminating the peripheral area (403);
- in the case of a negative result at the detection step (402), the step of obtaining the transformed image consists of using the digital image as the transformed image (404).

13. Method of searching, from a first digital image, in a database comprising a plurality of second digital images, **characterized in that** it comprises a comparison method according to one of Claims 8 to 12.

14. Method of searching, from a first digital image, in a database comprising a plurality of second digital images, **characterized by** a step of calculating a distance between a first descriptor (D1, D2) obtained by applying a global image descriptor calculation algorithm to the first image and a second descriptor (D'ᵢ) obtained by applying the image descriptor calculation algorithm to a transformed image obtained from a second image by eliminating a peripheral area identified on said second image as likely to represent a frame.

15. Method according to Claim 14, comprising a step of calculating a distance between the first descriptor (D1, D2) and a third descriptor (Di) obtained by applying the image descriptor calculation algorithm to the second image.

16. Method according to one of Claims 13 to 15, comprising the following steps:
- for each of the second images, calculating the distance (308; 408) between the first image and the second image by the use of said descriptors;
- selecting (310; 410) the second image for which the calculated distance is minimum.

17. Device for determining a global image descriptor from a digital image, **characterized in that** it comprises:
- means of identifying at least one peripheral area of the image likely to represent a frame;
- means of obtaining a transformed image from the digital image according to the identification resulting from the identification means, by either eliminating the peripheral area or using the digital image as the transformed image;
- means for applying a global image descriptor calculation algorithm to the transformed image, thus generating said descriptor.

18. Device according to Claim 17, wherein the means of obtaining the transformed image comprise means of eliminating the peripheral area.

19. Device according to Claim 17, wherein the identification means comprise means of detecting the presence in the image of at least one frame part.

20. Device according to Claim 19, comprising means for:
- in the case of the generation of a positive result by the detection means, eliminating the peripheral area, and
- in the case of the generation of a negative result by the detection means, using the digital image as a transformed image.

21. Device according to one of Claims 17 to 20, wherein the identification means comprise means of determining the position in the image of at least one frame part.

22. Device according to Claim 21, wherein the position determination means comprise contour detection means.

23. Device according to Claim 21 or 22, wherein the identification means are coupled to the position determination means.

24. Device for comparing a first digital image with a second digital image, **characterized in that** it comprises:
- a device for determining a first descriptor from the first image according to any of claims 17-23;
- means of calculating a distance between the first descriptor and a second descriptor obtained by applying said image descriptor calculation algorithm to the second image.

25. Device according to Claim 24, wherein the means of obtaining the transformed image comprise means of eliminating the peripheral area.

26. Device according to Claim 25, comprising:
- means for applying the image descriptor calculation algorithm to the first image, thus generating a third descriptor;
- means of calculating the distance between the third descriptor and the second descriptor.

27. Device according to Claim 24, wherein the identification means comprise means of detecting the presence in the first image of at least one frame part.

28. Device according to Claim 27, comprising means for:
- in the case of generating a positive result from the detection means, eliminating the peripheral area, and
- in the case of generating a negative result by the detection means, using the digital image as the transformed image.

29. Device for searching, from a first digital image, in a database comprising a plurality of second digital images, **characterized in that** it comprises a comparison device according to one of Claims 24 to 28.

30. Device for searching, from a first digital image, in a database comprising a plurality of second digital images, **characterized by** means of calculating the distance between a first descriptor obtained by applying a global image descriptor calculation algorithm to the first image and a second descriptor obtained by applying the image descriptor calculation algorithm to a transformed image obtained from a second image by the elimination of a peripheral area identified on said second image as likely to represent a frame.

31. Device according to Claim 30, comprising means of calculating the distance between the first descriptor and a third descriptor obtained by applying the image descriptor calculation algorithm to the second image.

32. Device according to one of Claims 29 to 31, comprising:
- means of calculating, for each of the second images, the distance between the first image and this second image using said descriptors;
- means of selecting the second image for which the calculated distance is minimum.

33. Data storage means comprising computer program code instructions for executing the steps of a method according to one of Claims 1 to 16.

34. Computer program, containing instructions such that, when said program is controlling a programmable data processing device, said instructions cause said data processing device to implement a method according to one of Claims 1 to 16.

## Patentansprüche

1. Verfahren zur Bestimmung eines globalen Bilddeskriptors aus einem digitalen Bild, **dadurch gekennzeichnet, dass** es die folgenden Schritte aufweist:
Identifizieren (301; 401, 402) von zumindest einem Randgebiet des Bildes, das wahrscheinlich einen Rahmen darstellt;
Erlangen (302; 404, 404) eines gemäß dem Ergebnis des Identifizierungsschrittes (301; 401, 402) aus dem digitalen Bild umgewandelten Bildes entweder durch Eliminieren des Randgebietes oder durch Verwenden des digitalen Bildes als das umgewandelte Bild;
Anwenden eines globalen Bilddeskriptor-Berechnungsalgorithmus (305; 405) auf das umgewandelte Bild, um den Deskriptor (D1; D0) zu erlangen.

2. Verfahren gemäß Anspruch 1, wobei der Schritt zum Erlangen des umgewandelten Bildes einen Schritt (302; 403) zum Eliminieren des Randgebietes aufweist.

3. Verfahren gemäß Anspruch 1, wobei der Identifizierungsschritt einen Schritt (402) zum Erfassen des Vorhandenseins von zumindest einem Rahmenanteil in dem Bild aufweist.

4. Verfahren gemäß Anspruch 3, wobei
in dem Fall eines positiven Ergebnisses bei dem Erfassungsschritt (402) der Schritt des Erlangens des umgewandelten Bildes einen Schritt des Eliminierens des Randgebietes (403) aufweist;
in dem Fall eines negativen Ergebnisses bei dem Erfassungsschritt (402) der Schritt des Erlangens des umgewandelten Bildes darin besteht, das digitale Bild als das umgewandelte Bild (404) zu verwenden.

5. Verfahren gemäß einem der Ansprüche 1 bis 4, wobei der Identifizierungsschritt einen Schritt zum Bestimmen der Position von zumindest einem Rahmenanteil in dem Bild aufweist.

6. Verfahren gemäß Anspruch 5, wobei der Schritt des Bestimmens der Position das Verwenden eines Umrisslinienerfassungsalgorithmus aufweist.

7. Verfahren gemäß Anspruch 5 oder 6, wobei das Randgebiet gemäß der Position bestimmt wird.

8. Verfahren zum Vergleichen eines ersten digitalen Bildes mit einem zweiten digitalen Bild, **dadurch gekennzeichnet, dass** es die folgenden Schritte aufweist:
Bestimmen eines ersten Deskriptors aus dem ersten digitalen Bild gemäß dem Verfahren aus einem der Ansprüche 1 bis 7;
Berechnen der Entfernung (308; 408) zwischen dem ersten Deskriptor (D1; D0) und einem durch Anwenden des Bilddeskriptor-Berechnungsalgorithmus auf das zweite Bild erlangten zweiten Deskriptor (Di).

9. Verfahren gemäß Anspruch 8, wobei der Schritt zum Erlangen des umgewandelten Bildes einen Schritt (302; 403) zum Eliminieren des Randgebietes aufweist.

10. Verfahren gemäß Anspruch 9, mit den folgenden Schritten:
Anwenden des Bilddeskriptor-Berechnungsalgorithmus (305) auf das erste Bild, um einen dritten Deskriptor (D2) zu erlangen;
Berechnen einer Entfernung zwischen dem dritten Deskriptor (D2) und dem zweiten Deskriptor (Di).

11. Verfahren gemäß Anspruch 8, wobei der Identifizierungsschritt einen Schritt (402) zum Erfassen des Vorhandenseins von zumindest einem Rahmenanteil in dem ersten Bild aufweist.

12. Verfahren gemäß Anspruch 11, wobei
in dem Fall eines positiven Ergebnisses bei dem Erfassungsschritt (402) der Schritt des Erlangens des umgewandelten Bildes einen Schritt des Eliminierens des Randgebietes (403) aufweist;
in dem Fall eines negativen Ergebnisses bei dem Erfassungsschritt (402) der Schritt des Erlangens des umgewandelten Bildes darin besteht, das digitale Bild als das umgewandelte Bild (404) zu verwenden.

13. Verfahren zum Suchen, ausgehend von einem ersten digitalen Bild, in einer eine Vielzahl von zweiten digitalen Bildern aufweisenden Datenbank, **dadurch gekennzeichnet, dass** es ein Verfahren zum Vergleichen gemäß einem der Ansprüche 8 bis 12 aufweist.

14. Verfahren zum Suchen, ausgehend von einem ersten digitalen Bild, in einer eine Vielzahl von zweiten digitalen Bildern aufweisenden Datenbank, **gekennzeichnet durch** einen Schritt zum Berechnen einer Entfernung zwischen einem **durch** Anwenden eines globalen Bilddeskriptor-Berechnungsalgorithmus auf das erste Bild erlangten ersten Deskriptor (D1, D2) und einem **durch** Anwenden des Bilddeskriptor-Berechnungsalgorithmus auf ein umgewandeltes Bild erlangten zweiten Deskriptor (Di), wobei das umgewandelte Bild aus einem zweiten Bild **durch** Eliminieren eines in dem zweiten Bild als wahrscheinlich einen Rahmen darstellenden identifizierten Randgebietes erlangt ist.

15. Verfahren gemäß Anspruch 14, mit einem Schritt zum Berechnen einer Entfernung zwischen dem ersten Deskriptor (D1, D2) und einem durch Anwenden des Bilddeskriptor-Berechnungsalgorithmus auf das zweite Bild erlangten dritten Deskriptor (Di).

16. Verfahren gemäß einem der Ansprüche 13 bis 15, mit den folgenden Schritten:
Berechnen der Entfernung (308; 408), für jedes der zweiten Bilder, zwischen dem ersten Bild und dem zweiten Bild durch Verwenden der Deskriptoren;
Auswählen (310; 410) des zweiten Bildes, für das die berechnete Entfernung minimal ist.

17. Vorrichtung zur Bestimmung eines globalen Bilddeskriptors aus einem digitalen Bild, **gekennzeichnet durch**:
eine Einrichtung zur Identifizierung von zumindest einem Randgebiet des Bildes, das wahrscheinlich einen Rahmen darstellt;
eine Einrichtung zur Erlangung eines gemäß der sich aus der Identifizierungseinrichtung ergebenden Identifizierung aus dem digitalen Bild umgewandelten Bildes entweder **durch** Eliminierung des Randgebietes oder durch Verwendung des digitalen Bildes als das umgewandelte Bild;
eine Einrichtung zur Anwendung eines globalen Bilddeskriptor-Berechnungsalgorithmus auf das umgewandelte Bild, um den Deskriptor zu erzeugen.

18. Vorrichtung gemäß Anspruch 17, wobei die Einrichtung zur Erlangung des umgewandelten Bildes eine Einrichtung zur Eliminierung des Randgebietes aufweist.

19. Vorrichtung gemäß Anspruch 17, wobei die Identifizierungseinrichtung eine Einrichtung zur Erfassung des Vorhandenseins von zumindest einem Rahmenanteil in dem Bild aufweist.

20. Vorrichtung gemäß Anspruch 19, mit
einer Einrichtung zur Eliminierung des Randgebietes in dem Fall der Erzeugung eines positiven Ergebnisses durch die Erfassungseinrichtung, und
einer Einrichtung zur Verwendung des digitalen Bildes als das umgewandelte Bild in dem Fall der Erzeugung eines negativen Ergebnisses durch die Erfassungseinrichtung.

21. Vorrichtung gemäß einem der Ansprüche 17 bis 20, wobei die Identifizierungseinrichtung eine Einrichtung zur Bestimmung der Position von zumindest einem Rahmenanteil in dem Bild aufweist.

22. Vorrichtung gemäß Anspruch 21, wobei die Positionsbestimmungseinrichtung eine Umrisslinienerfassungseinrichtung aufweist.

23. Vorrichtung gemäß Anspruch 21 oder 22, wobei die Identifizierungseinrichtung an die Positionsbestimmungseinrichtung gekoppelt ist.

24. Vorrichtung zum Vergleich eines ersten digitalen Bildes mit einem zweiten digitalen Bild, **gekennzeichnet durch**:
eine Vorrichtung zur Bestimmung eines ersten Deskriptors aus dem ersten Bild gemäß einem der Ansprüche 17 bis 23;
eine Einrichtung zur Berechnung einer Entfernung zwischen dem ersten Deskriptor und einem **durch** Anwendung des Bilddeskriptor-Berechnungsalgorithmus auf das zweite Bild erlangten zweiten Deskriptor.

25. Vorrichtung gemäß Anspruch 24, wobei die Einrichtung zur Erlangung des umgewandelten Bildes eine Einrichtung zur Eliminierung des Randgebietes aufweist.

26. Vorrichtung gemäß Anspruch 25, mit
einer Einrichtung zur Anwendung des Bilddeskriptor-Berechnungsalgorithmus auf das erste Bild, um einen dritten Deskriptor zu erzeugen;
einer Einrichtung zur Berechnung der Entfernung zwischen dem dritten Deskriptor und dem zweiten Deskriptor.

27. Vorrichtung gemäß Anspruch 24, wobei die Identifizierungseinrichtung eine Einrichtung zur Erfassung des Vorhandenseins von zumindest einem Rahmenanteil in dem ersten Bild aufweist.

28. Vorrichtung gemäß Anspruch 27, mit
einer Einrichtung zur Eliminierung des Randgebietes in dem Fall der Erzeugung eines positiven Ergebnisses durch die Erfassungseinrichtung, und
einer Einrichtung zur Verwendung des digitalen Bildes als das umgewandelte Bild in dem Fall der Erzeugung eines negativen Ergebnisses durch die Erfassungseinrichtung.

29. Vorrichtung zum Suchen, ausgehend von einem ersten digitalen Bild, in einer eine Vielzahl von zweiten digitalen Bildern aufweisenden Datenbank, **dadurch gekennzeichnet, dass** sie eine Vorrichtung zum Vergleich gemäß einem der Ansprüche 24 bis 28 aufweist.

30. Vorrichtung zum Suchen, ausgehend von einem ersten digitalen Bild, in einer eine Vielzahl von zweiten digitalen Bildern aufweisenden Datenbank, **gekennzeichnet durch** eine Einrichtung zur Berechnung der Entfernung zwischen einem **durch** Anwendung eines globalen Bilddeskriptor-Berechnungsalgorithmus auf das erste Bild erlangten ersten Deskriptor und einem **durch** Anwendung des Bilddeskriptor-Berechnungsalgorithmus auf ein umgewandeltes Bild erlangten zweiten Deskriptor, wobei das umgewandelte Bild aus einem zweiten Bild **durch** Eliminierung eines in dem zweiten Bild als wahrscheinlich einen Rahmen darstellenden identifizierten Randgebietes erlangt ist.

31. Vorrichtung gemäß Anspruch 30, mit einer Einrichtung zur Berechnung der Entfernung zwischen dem ersten Deskriptor und einem durch Anwendung des Bilddeskriptor-Berechnungsalgorithmus auf das zweite Bild erlangten dritten Deskriptor.

32. Vorrichtung gemäß einem der Ansprüche 29 bis 31, mit
einer Einrichtung zur Berechnung der Entfernung, für jedes der zweiten Bilder, zwischen dem ersten Bild und dem zweiten Bild durch die Verwendung der Deskriptoren;
einer Einrichtung zur Auswahl des zweiten Bildes, für das die berechnete Entfernung minimal ist.

33. Datenspeichereinrichtung mit Computerprogrammcode-Anweisungen zum Ausführen der Schritte eines Verfahrens gemäß einem der Ansprüche 1 bis 16.

34. Computerprogramm, das Anweisungen derart enthält, dass, wenn das Programm eine programmierbare Datenverarbeitungsvorrichtung steuert, die Anweisungen die Datenverarbeitungsvorrichtung dazu veranlassen, ein Verfahren gemäß einem der Ansprüche 1 bis 16 zu implementieren.

## Revendications

1. Procédé de détermination d'un descripteur d'image global à partir d'une image numérique, **caractérisé en ce qu'**il comprend les étapes suivantes :
- l'identification (301 ; 401, 402) d'au moins une zone périphérique de l'image susceptible de représenter un cadre ;
- l'obtention (302 ; 403, 404) d'une image transformée à partir de l'image numérique conformément au résultat de l'étape d'identification (301 ; 401, 402), soit en éliminant la zone périphérique, soit en utilisant l'image numérique en tant qu'image transformée ;
- l'application d'un algorithme (305 ; 405) de calcul de descripteur d'image global à l'image transformée afin d'obtenir ledit descripteur (D1 ; D0).

2. Procédé selon la revendication 1, dans lequel l'étape d'obtention de l'image transformée comprend une étape (302 ; 403) d'élimination de la zone périphérique.

3. Procédé selon la revendication 1, dans lequel l'étape d'identification comprend une étape (402) de détection de la présence dans l'image d'au moins une partie de cadre.

4. Procédé selon la revendication 3, dans lequel :
- dans le cas d'un résultat positif à l'étape de détection (402), l'étape d'obtention de l'image transformée comprend une étape d'élimination de la zone périphérique (403) ;
- dans le cas d'un résultat négatif à l'étape de détection (402), l'étape d'obtention de l'image transformée consiste à utiliser l'image numérique en tant qu'image transformée (404).

5. Procédé selon l'une des revendications 1 à 4, dans lequel l'étape d'identification comprend une étape de détermination de la position dans l'image d'au moins une partie de cadre.

6. Procédé selon la revendication 5, dans lequel l'étape de détermination de la position comprend l'utilisation d'un algorithme de détection de contour.

7. Procédé selon la revendication 5 ou 6, dans lequel la zone périphérique est déterminée conformément à ladite position.

8. Procédé de comparaison d'une première image numérique à une seconde image numérique, **caractérisé en ce qu'**il comprend les étapes suivantes :
- la détermination d'un premier descripteur à partir de la première image numérique conformément au procédé selon l'une quelconque des revendications 1 à 7 ;
- le calcul de la distance (308 ; 408) entre le premier descripteur (D1 ; D0) et un deuxième descripteur (Di) obtenu en appliquant ledit algorithme de calcul de descripteur d'image à la seconde image.

9. Procédé selon la revendication 8, dans lequel l'étape d'obtention de l'image transformée comprend une étape (302, 403) d'élimination de la zone périphérique.

10. Procédé selon la revendication 9, comprenant les étapes suivantes :
- l'application de l'algorithme (305) de calcul de descripteur d'image à la première image afin d'obtenir un troisième descripteur (D2) ;
- le calcul d'une distance entre le troisième descripteur (D2) et le deuxième descripteur (Di).

11. Procédé selon la revendication 8, dans lequel l'étape d'identification comprend une étape (402) de détection de la présence dans la première image d'au moins une partie de cadre.

12. Procédé selon la revendication 11, dans lequel :
- dans le cas d'un résultat positif à l'étape de détection (402), l'étape d'obtention d'une image transformée comprend une étape d'élimination de la zone périphérique (403) ;
- dans le cas d'un résultat négatif à l'étape de détection (402), l'étape d'obtention de l'image transformée consiste à utiliser l'image numérique en tant qu'image transformée (404).

13. Procédé de recherche, à partir d'une première image numérique, dans une base de données comprenant une pluralité de secondes images numériques, **caractérisé en ce qu'**il comprend un procédé de comparaison selon l'une des revendications 8 à 12.

14. Procédé de recherche, à partir d'une première image numérique, dans une base de données comprenant une pluralité de secondes images numériques, **caractérisé par** une étape de calcul d'une distance entre un premier descripteur (D1, D2) obtenu en appliquant un algorithme de calcul de descripteur d'image global à la première image et un deuxième descripteur (D'ᵢ) obtenu en appliquant l'algorithme de calcul de descripteur d'image à une image transformée obtenue à partir d'une seconde image en éliminant une zone périphérique identifiée sur ladite seconde image telle que susceptible de représenter un cadre.

15. Procédé selon la revendication 14, comprenant une étape de calcul d'une distance entre le premier descripteur (D1, D2) et un troisième descripteur (Di) obtenu en appliquant l'algorithme de calcul de descripteur d'image à la seconde image.

16. Procédé selon l'une des revendications 13 à 15, comprenant les étapes suivantes :
- pour chacune des secondes images, le calcul de la distance (308 ; 408) entre la première image et la seconde image par l'utilisation desdits descripteurs ;
- la sélection (310 ; 410) de la seconde image pour laquelle la distance calculée est minimale.

17. Dispositif pour déterminer un descripteur d'image global à partir d'une image numérique, **caractérisé en ce qu'**il comporte :
- des moyens d'identification d'au moins une zone périphérique de l'image susceptible de représenter un cadre ;
- des moyens d'obtention d'une image transformée à partir de l'image numérique conformément à l'identification résultant du moyen d'identification, soit en éliminant la zone périphérique, soit en utilisant l'image numérique en tant qu'image transformée ;
- des moyens pour appliquer un algorithme de calcul de descripteur d'image global à l'image transformée, générant ainsi ledit descripteur.

18. Dispositif selon la revendication 17, dans lequel les moyens d'obtention de l'image transformée comprennent des moyens d'élimination de la zone périphérique.

19. Dispositif selon la revendication 17, dans lequel les moyens d'identification comprennent des moyens de détection de la présence dans l'image d'au moins une partie de cadre.

20. Dispositif selon la revendication 19, comportant des moyens pour :
- dans le cas de la génération d'un résultat positif par les moyens de détection, éliminer la zone périphérique, et
- dans le cas de la génération d'un résultat négatif par les moyens de détection, utiliser l'image numérique en tant qu'image transformée.

21. Dispositif selon l'une des revendications 17 à 20, dans lequel les moyens d'identification comprennent des moyens de détermination de la position dans l'image d'au moins une partie de cadre.

22. Dispositif selon la revendication 21, dans lequel les moyens de détermination de position comprennent des moyens de détection de contour.

23. Dispositif selon la revendication 21 ou 22, dans lequel les moyens d'identification sont couplés aux moyens de détermination de position.

24. Dispositif pour comparer une première image numérique à une seconde image numérique, **caractérisé en ce qu'**il comporte :
- un dispositif pour déterminer un premier descripteur à partir de la première image selon l'une quelconque des revendications 17 à 23 ;
- des moyens de calcul d'une distance entre le premier descripteur et un deuxième descripteur obtenu en appliquant ledit algorithme de calcul de descripteur d'image à la seconde image.

25. Dispositif selon la revendication 24, dans lequel les moyens d'obtention de l'image transformée comprennent des moyens d'élimination de la zone périphérique.

26. Dispositif selon la revendication 25, comportant :
- des moyens pour appliquer l'algorithme de calcul de descripteur d'image à la première image, générant ainsi un troisième descripteur ;
- des moyens de calcul de la distance entre le troisième descripteur et le deuxième descripteur.

27. Dispositif selon la revendication 24, dans lequel les moyens d'identification comprennent des moyens de détection de la présence dans la première image d'au moins une partie de cadre.

28. Dispositif selon la revendication 27, comprenant des moyens pour :
- dans le cas de la génération d'un résultat positif à partir des moyens de détection, éliminer la zone périphérique, et
- dans le cas de la génération d'un résultat négatif par les moyens de détection, utiliser l'image numérique en tant qu'image transformée.

29. Dispositif de recherche, à partir d'une première image numérique, dans une base de données comportant une pluralité de secondes images numériques, **caractérisé en ce qu'**il comporte un dispositif de comparaison selon l'une des revendications 24 à 28.

30. Dispositif de recherche, à partir d'une première image numérique, dans une base de données comportant une pluralité de secondes images numériques, **caractérisé par** des moyens de calcul de la distance entre un premier descripteur obtenu en appliquant un algorithme de calcul de descripteur d'image global à la première image et un seconde descripteur obtenu en appliquant l'algorithme de calcul de descripteur d'image à une image transformée obtenue à partir d'une seconde image par l'élimination d'une zone périphérique identifiée sur ladite seconde image comme susceptible de représenter un cadre.

31. Dispositif selon la revendication 30, comportant des moyens de calcul de la distance entre le premier descripteur et un troisième descripteur obtenu en appliquant l'algorithme de calcul de descripteur d'image à la seconde image.

32. Dispositif selon l'une des revendications 29 à 31, comportant :
- des moyens de calcul, pour chacune des secondes images, de la distance entre la première image et cette seconde image en utilisant lesdits descripteurs ;
- des moyens de sélection de la seconde image pour laquelle la distance calculée est minimale.

33. Moyens de stockage de données comprenant des instructions de code de programme d'ordinateur pour exécuter les étapes d'un procédé selon l'une des revendications 1 à 16.

34. Programme d'ordinateur, contenant des instructions telles que, lorsque ledit programme commande un dispositif de traitement de données programmable, lesdites instructions amènent ledit dispositif de traitement de données à exécuter un procédé selon l'une des revendications 1 à 16.
